# EUROPEAN PATENT SPECIFICATION

(11) **EP 2 285 756 B1**
(45) Date of publication and mention of the grant of the patent: **02.01.2013**
(21) Application number: 09746240.2
(22) Date of filing: 11.05.2009
(51) Int. Cl.: C04B 41/00, C04B 41/52

(54) **A SUPERFICIALLY-TREATED STONE-MATERIAL MANUFACTURED ARTICLE, AND A PROCESS FOR OBTAINING THE SAME**
AUS OBERFLÄCHENBEHANDELTEM STEINMATERIAL HERGESTELLTER ARTIKEL UND VERFAHREN ZU SEINER HERSTELLUNG
ARTICLE FABRIQUÉ À PARTIR D'UN MATÉRIAU DE TYPE PIERRE À TRAITEMENT DE SURFACE ET PROCÉDÉ PERMETTANT D'OBTENIR LEDIT ARTICLE

(30) Priority: 12.05.2008 IT VR20080056
(43) Date of publication of application: 23.02.2011
(73) Proprietor: Aros S.r.l., 37010- Affi (Verona) (IT)
(72) Inventor: Fioratti, Stefano, I-25015 Desenzano - Bresica (IT)
(74) Representative: Reniero, Cirillo Silvano
(86) International application number: PCT/IB2009/051932
(87) International publication number: WO 2009/138945

(56) References cited:
- EP-A2- 1 837 319
- P.FAVIA,R.D'AGOSTINO,F.FRACASSI: "Plasma and surface diagnostics in PECVD from silicon containing organic monomers" PURE AND APPL. CHEM., vol. 66, no. 6, 1994, pages 1373-1380, XP002543165
- M.ZIELECKA, E.BUJNOWSKA: "Silicone-containing matrices as protective coatings, Properties and applications" PROGRESS IN ORGANIC COATINGS, vol. 55, 2006, pages 160-167, XP002543166

## Description

The present invention regards a manufactured article made of stone material, such as a tile or slab of granite, marble or the like, superficially treated so as to obtain one or more cover layers that ennoble it, i.e. they make it more resistant to chemical attack, in particular to acid attack and to stains, as well as a process for obtaining the same.

As is known, when stone materials come into contact with acid substances, they can undergo processes of deterioration whose severity is naturally a function of the composition of the material, of the attacking chemical substance and the contact time.

The chemical attack by acid substances on stone material is naturally the result of the reaction between the chemical agent and the stone material, which can give rise to corrosion, with consequent variation of the surface, and thus of the surface finishing of the material, and/or to absorption and consequent alteration, for example, of the color or color tone of the material.

In the European patent application EP-1 837 319, a manufactured article is taught which is obtained from agglomerated stone material, i.e. so-called "artificial" stone which in addition to containing natural stone material also includes a resin (typically one or more polyester resins); such agglomerated material has a surface composition layer SiₓO_{y}C_{z}H_{w}, obtained by means of a plasma phase polymerization process, known as PECVD.

A manufactured article coated with such layer, as is stated in such document, has a good chemical resistance to acid substances (HCl), a good resistance to stain with compounds such as bleach, liquid soap, toothpaste, ammonia, Coca-cola® and wine, and an improved scratch resistance. In the same document, the interaction of the plasma phase polymerization of the composition -SiₓO_{y}C_{z}H_{w} with the resin-necessarily present in an agglomerate is not specified. During treatment; such resin is subjected to heating at temperatures equal to or greater than its softening range, and thus it is subjected to expansion, a phenomenon which can negatively influence the results of the surface treatment. Indeed, in tests conducted by the applicant, contradictory results were obtained, and in any case such treatment with artificial stone materials did not produce the desired effects.

The article "Plasma and surface diagnostics in PECVD from silicon containing organic monomers" Pure and Appl. Chem., vol. 66, no. 6, 1994, pages 1373-1380, deals with depositions on a substrate of thin films by means of PECVD technique.

The article "Silicone-containing matrices as protectice coatings, Properties and applications" Progess in organic Coatings, vol. 55, 2006, pages 160-167, examines the properties of siflcone-containing polymer matrixes as coating materials of porous building materials.

An object of the present invention is to provide a manufactured article made of natural stone material, such as a tile or slab of granite or marble, which is safely protected against attack by chemical and/or weathering agents.

Another object of the present invention is that of providing a manufactured article capable of resisting the attack of acid substances in particular, to a greater degree than the manufactured articles proposed up to now.

Another object of the present Invention is that of providing a manufactured article having one or more surfaces with greater stain and scratch resistance.

Another object of the present invention is that of providing a process for making a stone material manufactured that is more resistant to attack by chemical agents and/or weathering agents with respect to the known processes.

According to a first aspect, the present invention provides a stone material manufactured article including at least one coating layer comprising at least one polymer of molecular formula:

SlO_{y}CyH_{z}N_{w}

wherein x can be a whole number or fractional number between 0.5 and 20,
whereas y, z and w can be whole numbers or fractional numbers between 0 and 20,
applied by means of plasma phase polymerization of at least one silicon-and oxygen-based organic or inorganic monomer which is in the gaseous state in reaction conditions,
the manufactured article further comprising at least one cover layer of the at least one coating layer obtained by applying, above the coating layer, at least one resin-based compound selected from the group comprising:
   - fluorine phosphorus- silicon boron or sulphur-based polymers;
   - organometallic polymers;
   - thermosetting polymers;
   - polyurethanes, epoxy acrylates, phenols, polyurethane acrylate, vinyls, vinyl esters;
   - polymers of natural origin, such as cellulose or linseed oil, and
   - monomers belonging to the acrylic, epoxy, polyurethane group and their derivatives.

According to another aspect of the present invention, a process is provided for obtaining a manufactured article having at least one total or partial coating layer, comprising:
- at least one step of plasma phase polymerization of at least one silicon- and oxygen-based-organic-or-inorganic monomer on at least part of the manufactured article made of natural stone material thereby applying to the manufactured article at least one polymer with the following molecular formula:

   SiOₓC_{y}H_{z}N_{w}

   wherein x can be a whole number or fractional number between 0.5 and 20,
   whereas y, z and can be whole numbers or fractional numbers between 0 and 20; and
- at least one application step of at least one resin-based compound selected from the group comprising:
- fluorine-, phosphorus-, silicon-, boron- or sulphur-based polymers;
- organometallic polymers;
- thermosetting polymers.
- polyurethanes, epoxy acrylates, phenols, polyurethane acrylate, vinyls, vinyl-esters;
- polymers of natural origin, such as cellulose or linseed oil; and
- monomers belonging to the acrylic, epoxy, polyurethane group and their derivatives.

Preferably, the low temperature polymerization process of an organic or inorganic film takes place by bringing the reagent gases to the plasma state, where by plasma in the present description and in the claims it is meant an excited gas composed of electrons and ions which are not bonded together, obtained in specific temperature and pressure intervals.

According to the technique of plasma phase polymerization, known as the PECVD (plasma enhanced chemical vapor deposition) technique, i.e. deposition with chemical reaction by means of a plasma, a main reagent (monomer), possibly mixed with other gases, is brought to the plasma state at a pressure between 0.01 Pa and 100 Pa. In this pressure interval, the monomer is instantaneously fragmented and is bonded to other molecules to form the polymer, so that it becomes a concentrate of highly reactive species.

According to the present invention, it is possible with the PECVD technique to deposit on natural building materials, including stone material in particular, thin films or layers of SiOₓC_{y}H_{z}N_{w} composition wherein x can be a whole number or fractional number between 0.5 and 20, whereas y, z and w can be whole numbers or fractional numbers between 0 and 20, and all are modifiable for obtaining manufactured articles with surface coated with one or more films with chemical characteristics ranging from inorganic to silicon compounds, so as to have chemical attack and scratch resistance characteristics.

The monomers employed for the deposition reaction are organic and inorganic compounds based on silicon and oxygen, which are in the gaseous state in reaction conditions. Typical silicon-based organic compounds usable for the practical achievement of the present invention are selected from the group comprising any organosilicon compound containing silicon and oxygen and possibly carbon, hydrogen and nitrogen which can evaporate in a pressure range of 0.01 Pa - 100 Pa, such as for example hexamethyldisiloxane (HMDSO), tetramethylsilane (TMS), tetraethoxysilane (TEOS) which are fed to the reaction chamber together with oxygen gas. The ratio between the partial pressures of both gases (monomer and oxygen) will determine the chemical type of the obtained film. Increasing the presence of oxygen allows obtaining a coating with increasingly lower carbon contents, until carbon is excluded from the coating.

Typical silicon-based coatings usable for carrying out the present invention are selected from the group comprising SiOₓ, where x is preferably comprised between 1 and 3, silicones i.e. films of SiOₓC_{y}H_{z}N_{w} type containing carbon atoms and hydrogen atoms where the oxygen as process gas can be excluded, that is coatings in which there are layers with different chemical compositions.

According to the present invention, it is also possible to obtain several consecutive coating layers, and each of these can have a respective x, y, z and w by modifying the ratio of the partial pressures of the organosilicon gas and the oxygen.

The process of application or deposition of a polymer coating layer or film is carried out in a vacuum chamber, i.e. in fluid communication with a vacuum source or pumping system, typically one or more pumps for the vacuum or another suitable suction means, which is suitable for creating a reduced pressure of 0.01 - 100 Pa within the chamber. A manufactured article or articles made of building material are loaded in the chamber, and a Si-based material film is applied on at least one face thereof. The reagents (monomers) are brought to the plasma state by supplying energy to the chamber, typically in the form of high frequency electromagnetic energy, e. g. 13.56 MHz, or low frequency on the order of KHz, or at microwave frequency, by means of a radiofrequency generator of any suitable type.

Due to the low pressure conditions prevalent in the chamber, the plasma becomes a concentrate of highly reactive species. The by-products of the reaction consist of CO₂ and H₂O and possible unreacted monomer.

The polymer obtained with the PECVD technique is developed close to the surfaces delimiting the vacuum chamber; at at least one of such surfaces, the manufactured article or articles to be treated will be arranged. On the exposed surface or surfaces of the manufactured article, a thin film will be obtained, on the order of several micrometers, with composition similar to natural quartz SiO₂ or film of silicone type. If desired, by modifying the ratio between organosilicons and oxygen each time, multilayer films will be obtained as a function of the starting monomer.

After the application of one or more films created by means of PECVD treatment, at least one cover layer or product is applied, preferably resin-based, selected from the group composed of:
- fluorine-based polymers, such as for example perfluoropolyether fluoroelastomers, perfluoropolyurethanes, perfluoropolyoxyalkanes, fluorinated acrylic polymers, fluoroalkyl salts and derivatives thereof;
- phosphorus-based polymers, such as for example polyphosphazenes, polycarbophosphazenes, polythiophosphazenes, polythionylphosphazenes and polyphosphates;
- silicon-based polymers, such as for example polysiloxanes, polysilanes, polysilazanes and polycarbosilanes;
- boron-based polymers, such as for example polyborazines;
- sulphur-based polymers, such as for example polythiazenes;
- organometallic polymers intended as polymer materials of various nature, in whose structure transition metal complexes (Fe, Pt, Pd, Ir and the like, metallocene groups, Schiff bases and the like) are contained;
- thermosetting polymers, such as for example acrylics, polyesters, epoxy polymers;
- polyurethanes, epoxy acrylates, phenols, polyurethane acrylate, vinyls, vinyl ester;
- polymers of natural origin, such as cellulose or linseed oil; and
- monomers making up part, for example, of the acrylic, epoxy, polyurethane group and their derivatives.

The application of one or more cover layers has as effect that of improving the protection characteristics of the manufactured article, especially against chemical attack, increasing, therefore, the resistance to corrosion of the manufactured articles treated by means of plasma phase polymerization.

The coating and cover layer(s) ensure an effective and durable protection of the covered surfaces of the natural stone materials such as marble, granite, and stone, in particular against stains and against chemical attack by acid products, as well as protection from scratches that can be created following contact via rubbing with hard materials. The good anchoring, combined with the reduced (nanometric) thicknesses deposited allow obtaining an elastic surface deposition that is also suitable for irregular (not flat) surfaces.

According a preferred modification of the present invention, before applying the coating layers/film(s) to the manufactured article(s) based on a composition similar to quartz with the plasma method, as described above, the manufactured article(s) or a surface part thereof can be pretreated with a process known as "plasma grafting".

With the term "grafting", it is intended a process according to which oxidation reactions take place at least on one surface portion of a manufactured article. The expression "plasma grafting", on the other hand, for the purposes of the present invention indicates a process for applying chemical groups, formed in plasma phase, to the surface or part of the surface of a manufactured article made of building (in particular stone) material to be treated. According to the type of plasma employed, it is possible to apply to the manufactured article, for example, hydroxyl groups, amine groups or the like. There is a double effect of the pre-treatment with plasma grafting: due to its oxidizing power, it eliminates possible organic micro-contaminants, which are resolved and evaporated, and it also oxidizes the surface. The gases used for this process can be: oxygen, air, nitrogen, carbon dioxide, nitrogen oxides.

With a "plasma grafting" process, it is therefore possible to pre-treat a manufactured article, and then subsequently recoat it by means of a fairly thin coating layer by exploiting the plasma phase polymerization phenomena. This can be obtained, for example, by arranging the manufactured article in a vacuum chamber and feeding a gaseous principle reagent therein, possibly mixed with other gases, making the vacuum in the vacuum chamber up to a pressure in the range of 0.01 Pa-100 Pa and thus bringing the gas to the plasma state.

The possible pre-treatment with plasma grafting can allow an improved anchoring between the manufactured article and the subsequent film obtained with the PECVD technique.

Advantageously, before the pre-treatment with plasma grafting, a primer is applied to the manufactured article.

The operating sequence in a preferred surface treatment process according to the present invention is schematically reported hereinbelow:
0) Manufactured article + primer → Manufactured article with primer

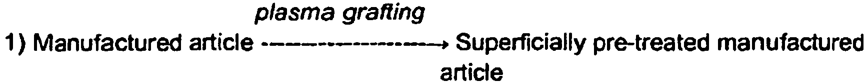

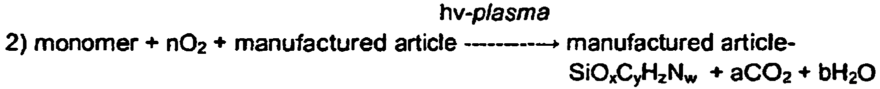

3) Manufactured article-SiOₓCyH_{z}N_{w} + Cover Layer → Covered manufactured article.

### Steps 0) and 1) are optional steps.

In the vacuum chamber, the operations for obtaining the polymer film on the manufactured article can be conducted in a continuous or in a discontinuous manner.

Preferably, the reaction times in the steps of plasma formation (step 1) plus 2)) and in the film deposition (step 3) on the manufactured article vary in a range comprised between 30 seconds and two hours, also as a function of the desired thickness of the film to be deposited.

After having subjected a manufactured article to steps 2) and 3) and possibly 0) and 1), the evaluation of the resistance of the manufactured article thus treated to the action of acid substances can be evaluated by maintaining a chemical agent in contact with the treated surface of the stone material for a certain time period, and after having cleaned such surface of the chemical agent, the damage caused by the chemical attack is evaluated. A chemical agent can interact with the manufactured article (stone material) according to two main mechanisms, separately or jointly:
- a chemical mechanism of reaction between the agent and one or more components of the manufactured article, and
- a physical mechanism of absorption and penetration of the acid or staining substance in the manufactured article.

In both cases, an alteration of the affected surface of the manufactured article is verified.

The application of acid substances on a surface of a manufactured article, typically made of stone material, can for example modify the surface finishing, the color or gloss as well as the mechanical strength (hardness) of the surface itself.

The acid substance resistance tests of a stone material tile treated according to the process of the present invention were conducted by means of visual evaluation and by measuring the variation of gloss and roughness.

By "gloss" of a surface, it meant the capacity of a material to reflect the light which hits thereon.

The gloss of a stone material is usually improved by means of dressing and polishing aimed to eliminate the roughness or sharpness of the material. Nevertheless, not all materials are equally polishable, and hence the gloss of a stone material much depends not only on the processing to which it is subjected but also on its chemical composition, color, texture etc..

The measurement of the gloss of a surface of a stone material can be carried out with an instrument, known as glossmeter, which detects and analyzes the light rays which are reflected by the surface itself. The measurement is determined as percentage of light intensity reflected from a point of the surface with reference to the parameters of a standard plate inside the glossmeter.

The instrument used for all the measurements was a glossmeter model Handy Gloss Checker IG-310 produced by Horiba Ltd of Kyoto - Japan.

The roughness was instead detected by means of a feeler head which, moved by a suitable advancing unit, detects and amplifies a signal linked to the surface roughness of a profile which it encounters by sliding on a surface.

The instrument used for all roughness measurements is the model SJ-301 produced by Mitutoyo Corporation of Kanagawa (Japan).

The reagents with which the acid substance attack resistance tests were carried out were:
- Viakal water softener with pH 1.7;
- lemon juice with pH 2.5;
- Coca-Cola with pH 3;
- Arco red wine vinegar with pH 3;
- Gaia ketchup with pH 3.5:

The test was carried out at room temperature.

The tests were conducted on 3 polished tiles of 30x30cm size.

The materials used for the tiles are: Carrara and Botticino Fiorito marble; the first is a "marble" in geological sense, the second is a common limestone used in the construction of manufactured articles for building.

In a first treatment step, the deposition with PECVD is carried out on both materials by means of three processes:
- a first process (called "S60", in brief) conducted for about 60 minutes, which causes the application of a compound similar to natural quartz (SiO₂);
- a second process (called "SX60", in brief) conducted for about 60 minutes, which causes the application of a compound with oxygen content (SiO_{2.5}) that is greater than process "S60";
- a third process (called "SM3030", in brief) conducted for about 30 minutes for the application of a first layer of nanoquartz- and nanosilicone-based compound, and then conducted for another 30 for the application of a second layer.

Three tiles of each material were thus obtained, and each of which was divided into 4 areas; on 3 of these 4 areas, a respective cover layer was applied by means of a cloth, as illustrated below:

| | | | |
|---|---|---|---|
| N | A | B | C |

Area A: 7x30cm size: PEVCD treatment + cover layer of type A (Protex (fluorinated compound) + Hydrex (silicone compound), produced by Tenax S.p.A. of Volargne - Italy);
Area B: 7x30cm size: PEVCD treatment + cover layer of type B (Protex);
Area C: 7x30cm size: PEVCD treatment + cover layer of type C (which is a fluorine polymer which catalyzes with UV rays);
Area N: 7x30cm size: PEVCD treatment without cover layer.
About 50ml/m² of cover layer were used for each area.

A tile was then treated only with compounds A-C, therefore without prearrangement of polymer by means of plasma phase polymerization. The tile was divided in the same manner (zones A-C and N) as the tile treated with polymer particles.

The gloss of each zone was then measured at at least five different points of the tiles without polymer deposition and the average detected value was taken as a reference measurement before chemical attack by means of acid substances.

After having spread the cover layer, the tile was then left to rest at room temperature (approximately 25°C) for about 10 minutes and the possible excess product (resin or cover layer) was removed from the four zones. After 24 hours, the reagents/acid substances were brought into contact with the surfaces of the tiles and more particularly with the zones A-C and N.

For the application of the acid substance, containment wells were prepared by means of silicone (containment material), which were subsequently filled with the acid substance. The temperature was always maintained around room temperature (25°C).

The acid substances/reagents were maintained in contact with the stone material for 2 hours. After this time, the reagents were removed and the samples were washed with running water, dried and subsequently cleaned with alcohol. The containment material was also removed.

The ketchup was applied in a quantity equal to about 1 g, while the other acid agents were applied in quantities equal to about 1.5 ml.

After 24 hours, the effect of the reagents was evaluated by means of observation of the stain, by means of measurement of the gloss in 5 points of the altered area, and, for the tiles with PEVCD treatment which had the best result, by means of roughness measurement.

The comparison between the obtained gloss, roughness and stain observation values and the values measured before the acid attack constitute a measurement of the resistance of the material (treated with resin and quartz film) to the reagent attack.

The results are reported in the following tables 1-26.

**Table 1: Gloss values (average of 5 detected values) of Carrara material, which was not subjected to nanoquartz treatment, measured before reagent attack.**

| Article not subjected to PEVCD treatment | Not-treated comparative | Protex + Hydrex comparative | Protex comparative | UVS1 comparative |
|---|---|---|---|---|
| | Reference gloss | Reference gloss | Reference gloss | Reference gloss |
| Carrara | 97 | 88 | 98 | 97 |

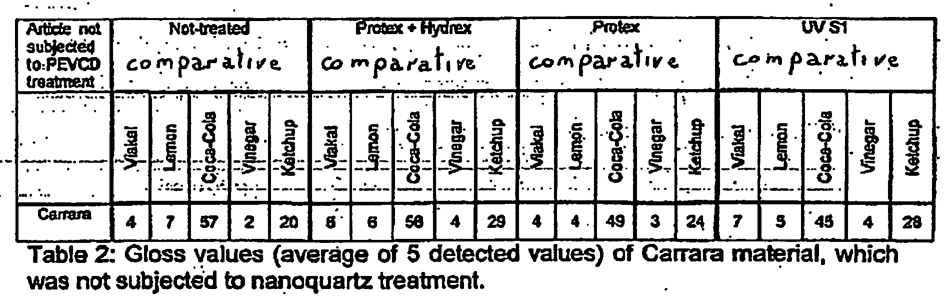

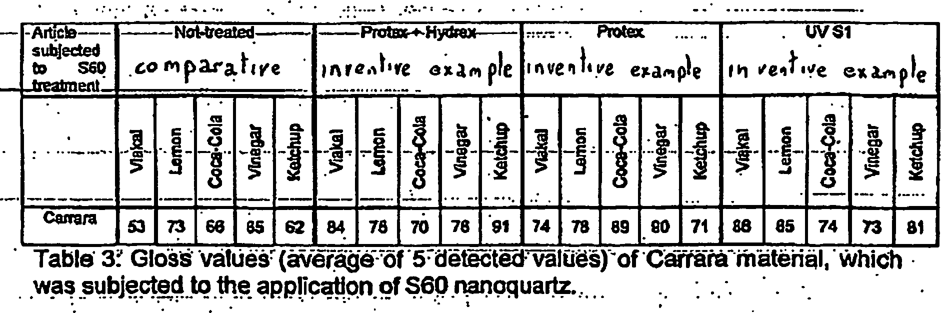

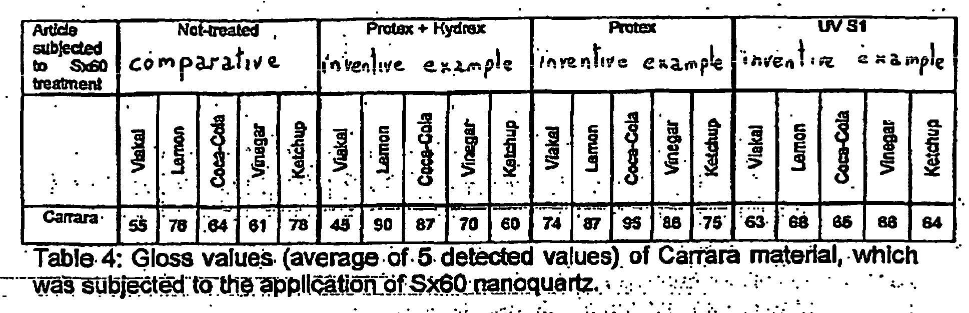

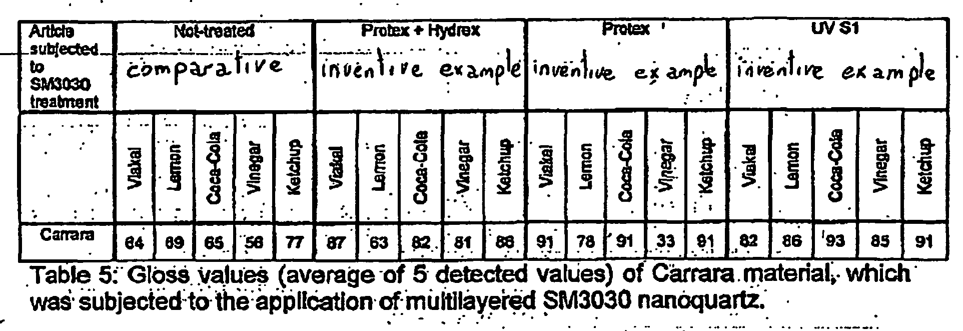

**Table 6: Gloss values (average of 5 detected values) of Botticino material, which was not treated with nanoquartz, measured before reagent attack.**

| Article not subjected to PEVCD treatment | Not-treated comparative | Protex + Hydrex comparative | Protex comparative | UV S1 : comparative |
|---|---|---|---|---|
| | Reference gloss | Reference gloss | Reference gloss | Reference gloss |
| Botticino | 84 | 86 | 83 | 82 |

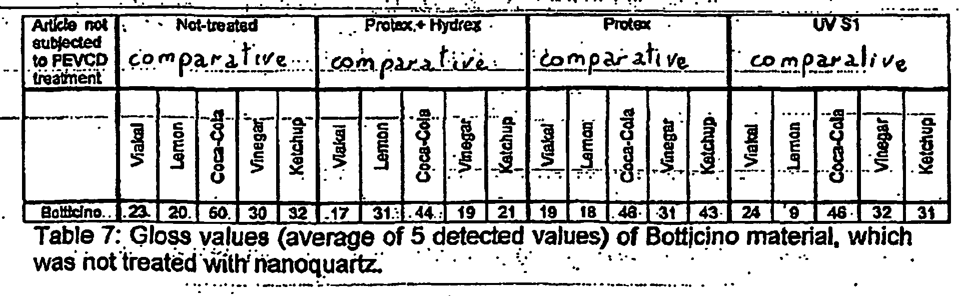

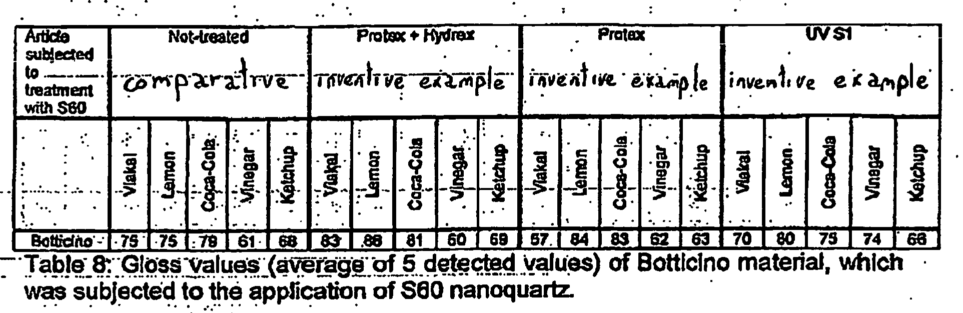

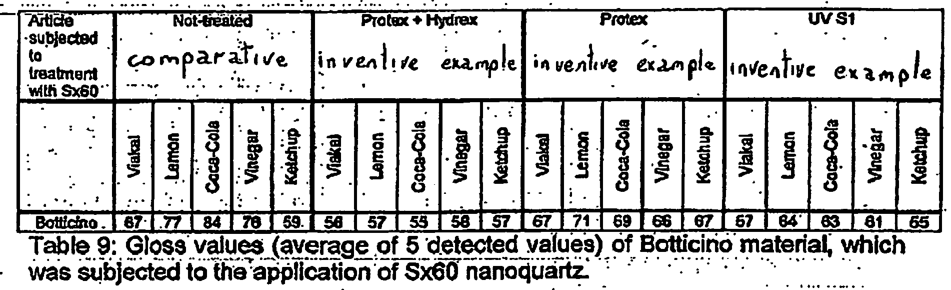

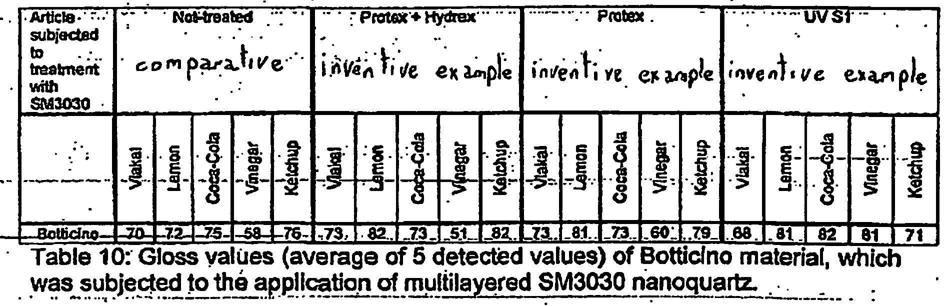

### Caption;

Stain: + = slight stain; ++ = high visible stain; +++:= stain having the substrate colour; ++++:= stain having a colour different with respect to the substrate colour; +++++:= stain having a colour extremely different with respect to the substrate colour;

Gloss Change: + =: gloss removal at individual points; ++= diffused gloss removal throughout the whole contact zone; ++++= uniform gloss removal throughout the whole contact zone; ++++= substrate corrosion at individual points +++++= substrate corrosion throughout the whole contact zone.

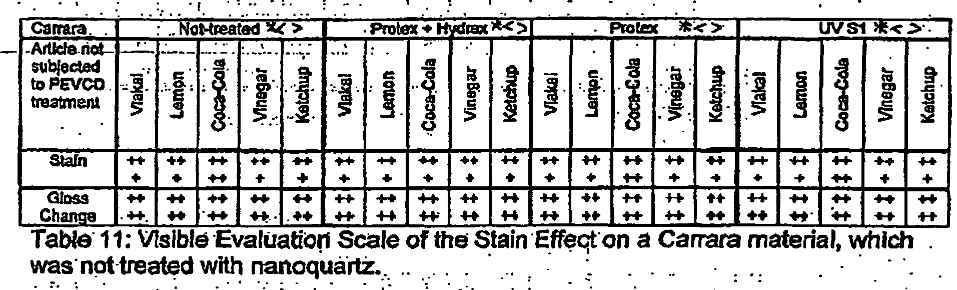

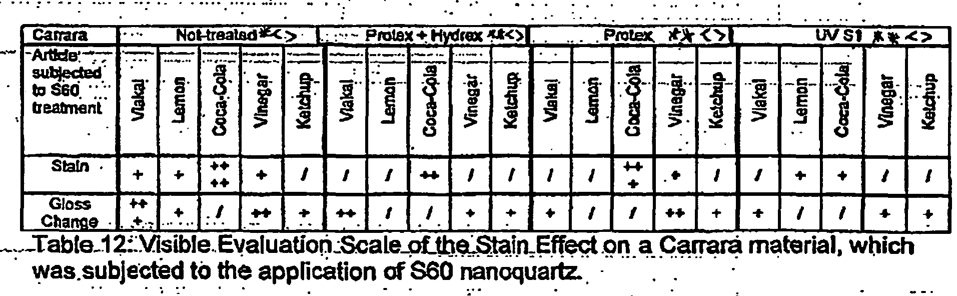

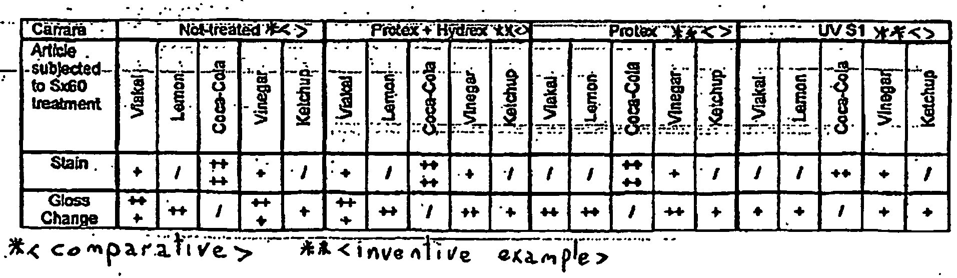

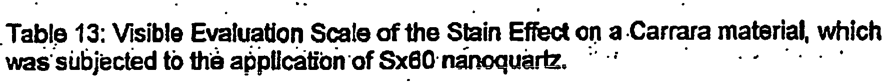

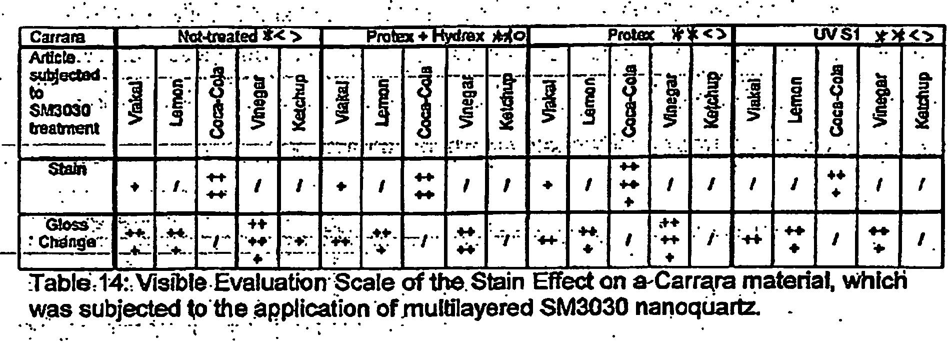

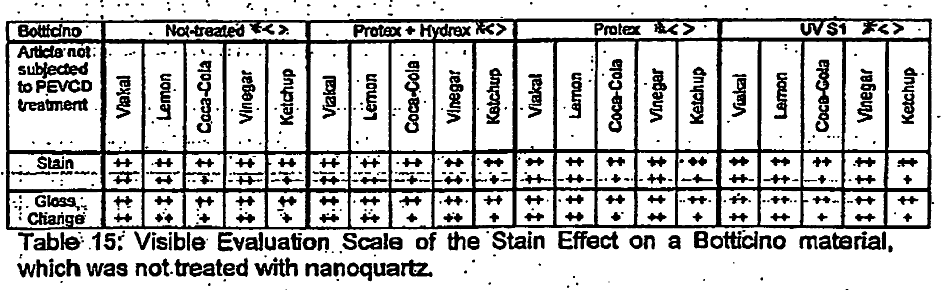

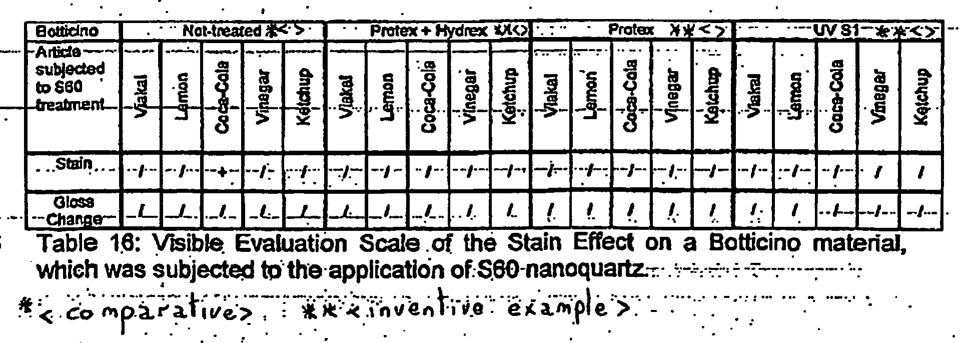

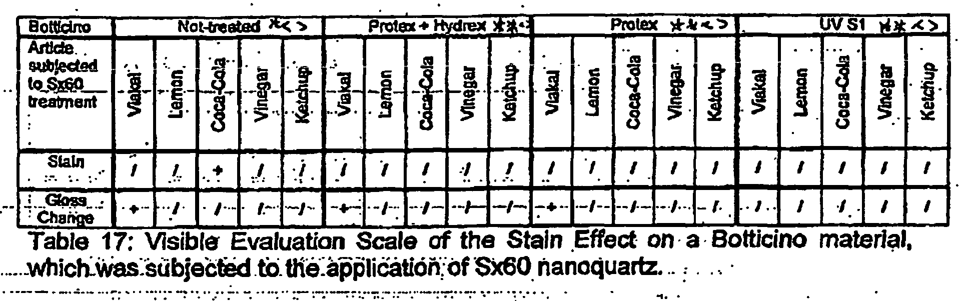

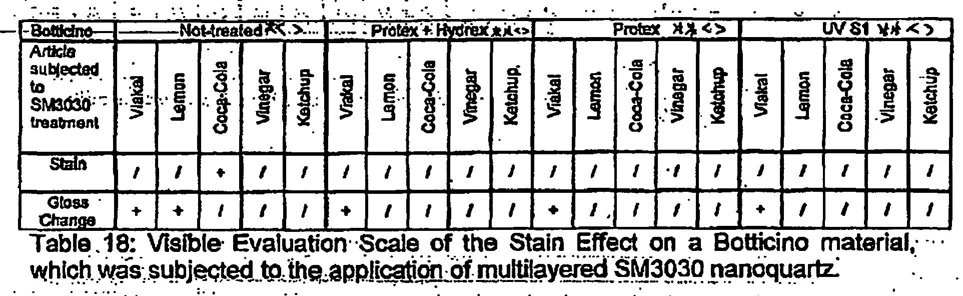

**Table 19: Roughness measurements Ra and Ry of Carrara material, which was not treated with nanoquartz, Measured before reagent attack (5 detected values).**

| Article not subjected to PEVCD treatment | comparative Roughness measurement (µm) | | comparative Roughness measurement (µm) | | comparative Roughness measurement (µm) | | comparative Roughness measurement (µm) | | comparative Roughness measurement (µm) | |
|---|---|---|---|---|---|---|---|---|---|---|
| | Ra | Ry | Ra | Ry | Ra | Ry | Ra | Ry | Ra | Ry |
| Carrara | 0.04 | 0.25 | 0.04 | 0.31 | 0.03 | 0.38 | 0.04 | 0.26 | 0.04 | 0.35 |

**Table 20: Roughness measurements Ra and Ry of Carrara material, which was not treated with nanoquartz, measured after reagent attack (1 detected value for each stain).**

| Article not subjected to PEVCD treatment | Roughness comparative measurement (µm) | | Roughness comparative measurement (µm) | | Roughness comparative measurement (µm) | | Roughness comparative measurement (µm) | | Roughness comparative measurement (µm) | |
|---|---|---|---|---|---|---|---|---|---|---|
| | Viakal | | Lemon | | Coca-Cola | | Vinegar | | Ketchup | |
| | Ra | Ry | Ra | Ry | Ra | Ry | Ra | Ry | Ra | Ry |
| Canada | 2.50 | 15.19 | 8.33 | 49.87 | 0.10 | 1.76 | 2.62 | 16.17 | 0.39 | 3.29 |

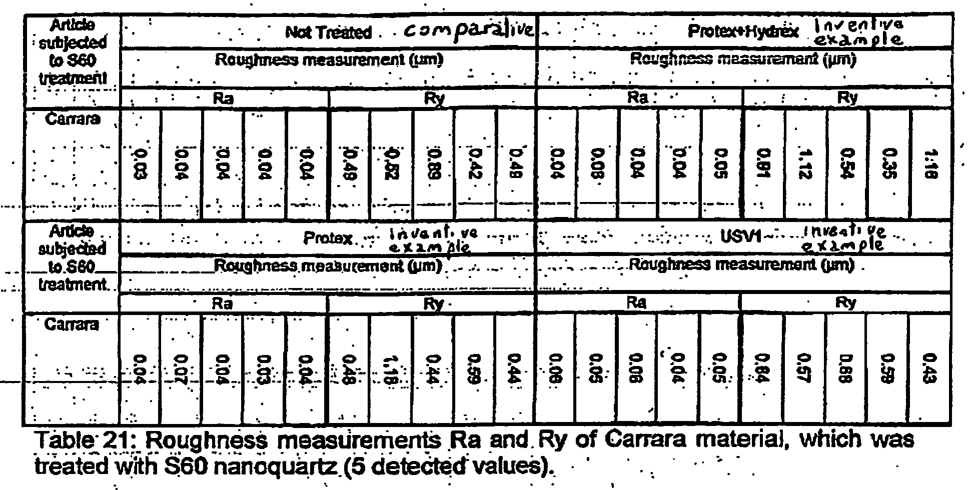

**Table 22: Roughness measurements Ra and Ry of Carrara material, which was treated with S60 nanoquartz and with Protex+Hydrex, measured after reagent attack (1 detected value for each stain).**

| Article subjected to S60 treatment and treated with Protex Hydrex | Roughness inventive example measurement (µm) | | Roughness inventive example mesurement (µm) | | Roughness inventive example measurement (µm) | | Roughness inventive example measurement (µm) | | Roughness inventive example measurement (µm) | |
|---|---|---|---|---|---|---|---|---|---|---|
| | Viakal | | Lemon | | Coca-Cola | | Vinegar | | Ketchup | |
| | Ra | Ry | Ra | Ry | Ra | Ry | Ra | Ry | Ra | Ra |
| Carrara | 0.28 | 2.53 | 0.03 | 0.30 | 0.18 | 3.17 | 0.04 | 0.51 | 0.06 | 1-45 |

**Table 23: Roughness measurements Ra and By of Botticino material which was not treated with nanoquartz, measured before reagent attack (5 detected values).**

| Article not subjected to PEVCD treatment | comparative Roughness measurement (µm) | | comparative Roughness measurement (µm) ) | | comparative Roughness measurement (µm) | | comparative Roughness measurement (µm) | | comparative Roughness measurement (µm) | |
|---|---|---|---|---|---|---|---|---|---|---|
| | Ra | Ry | Ra | Ry | Ra | Ry | Ra | Ry | Ra | Ry |
| Botticino | 0.03 | 0.37 | 0.40 | 6.55 | 0.08 | 0.86 | 0.10 | 2.24 | 0.52 | 7.54 |

**Table 24: Roughness measurements Ra and Ry of Botticino material, which was not treated with nanoquartz, measured after reagent attack (1 detected value for each stain).**

| Article not subjected To PEVCD treatment | Roughnes comparative measurement (µm) | | Roughness comparative measurement (µm) | | Roughness comparative measurement (µm) | | Roughness comparative measurement (µm) | | Roughness comparative measurement (µm) | |
|---|---|---|---|---|---|---|---|---|---|---|
| | Viakal | | Lemon | | Coca-Cola | | Vinegar | | ketchup | |
| | Ra | Ry | Ra | Ry | Ra | Ry | Ra | Ry | Ra | Ry |
| Botticino | 2.82 | 23.06 | 7.76 | 48.67 | 0.19 | 3.00 | 6.74 | 39.93 | 1.45 | 10.33 |

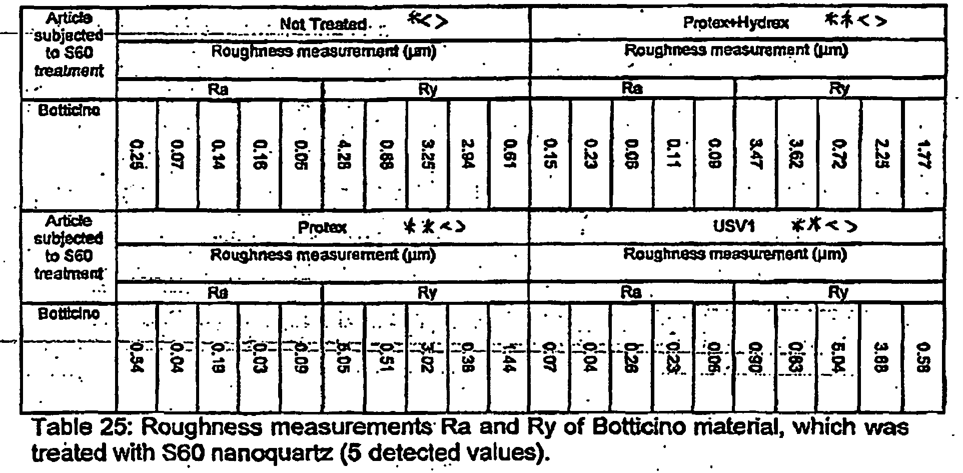

**Table 26: Roughness measurements Ra and Ry of Botticino material, which was treated with S60 nanoquartz and with Protex+Hydrex, measured after reagent attack (1 detected value for each stain).**

| Article subjected to S60 treatment and treated with Protex Hydrex | Roughness inventive example measurement (µm) | | Roughness inventive example measurement (µm) | | Roughness. inventive example measurement (µm) | | Roughness inventive example measurement (µm) | | Roughness inventive example measurement (µm) | |
|---|---|---|---|---|---|---|---|---|---|---|
| | Vlakal | | Lemon | | Coca-Cola | | Vinegar | | Ketchup | |
| | Ra | Ry | Ra | Ry | Ra | Ry | Ra | Ry | Ra | Ry |
| botticino | 0.36 | 5.02 | 0.06 | 0.73 | 0.07 | 1.13 | 0.11 | 2.99 | 0.11 | 2.99 |

Tests were then conducted on a stain-sensitive light granite called Cachemire White.

For carrying out such tests, a granite-chip floor tile of 30x30cm size was used and nanoquartz was deposited with a PECVD technique (with the S60 process). Then, the granite-chip floor tile was divided into 3 parts, a first part was treated with PROTEX+HYDREX, a second part with a fluorinated silane-based product, produced by Maflon s.r.l. of Castelli Calepio (Bergamo - Italy), while a third part was not treated.

The following were then applied on the granite-chip floor tile: Valpolicella Classico red wine produced by Azienda Agricola Buglioni of Pescantina (Verona - Italy), Pellini Top coffee of Pellini Caffè S.p.A. of Bussolengo (Verona), Ducato Estense balsamic vinegar produced by the Acetificio (vinegar factory) of Balsamico s.r.l. of Modena -Italy and extra-virgin olive oil produced by Giusto lacopi of Gorfigliano (Lucca - Italy).

The results of such tests are indicated in the following tables 27 - 29.

### Caption:

Stain: +: slight stain; ++:= high visible stain; +++:= stain having the substrate colour; ++++:= stain having a colour different with respect to the substrate colour; +++++:= stain having a colour extremely different with respect to the substrate colour

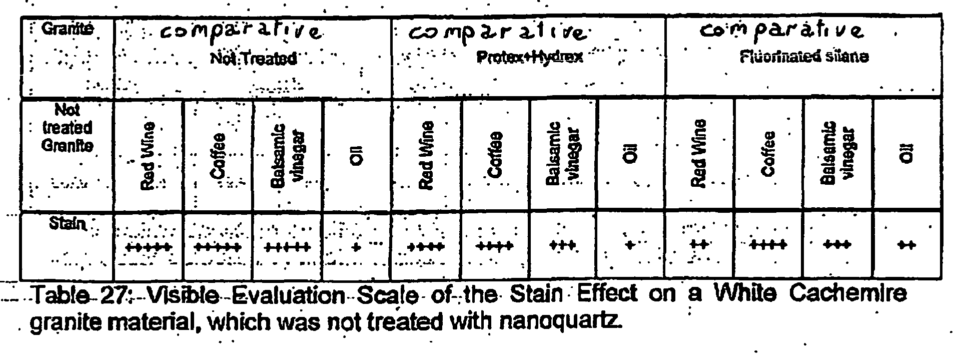

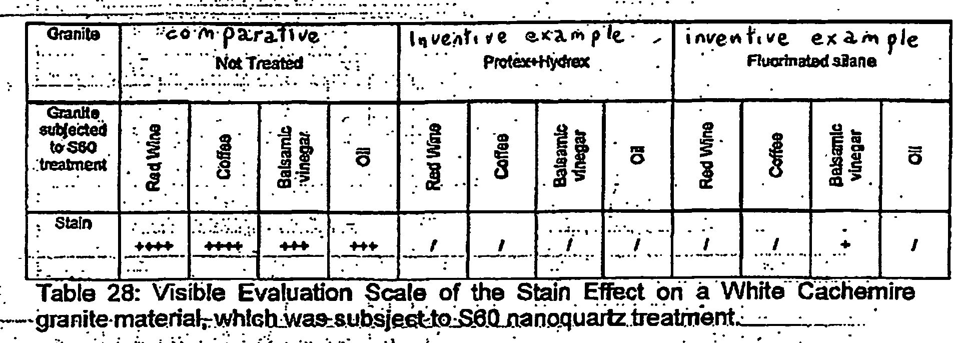

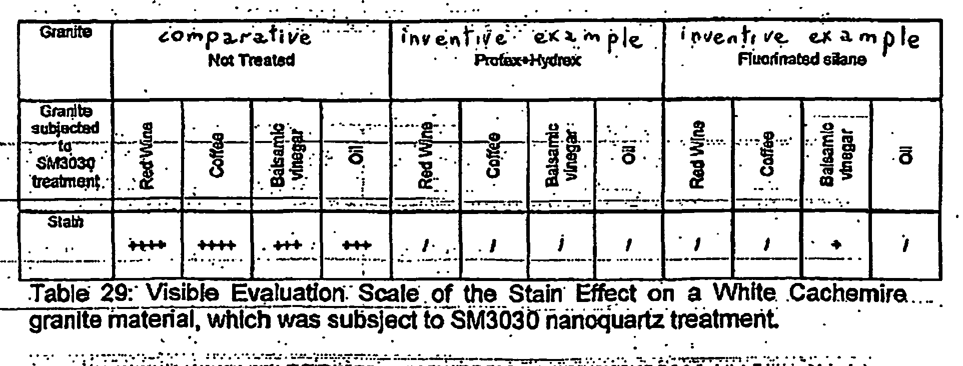

Such results show that the application of a coating and cover layer according to a process in accordance with the present invention causes a considerable increase in the stain resistance, measured by means of visual evaluation. For the granite, in fact, the stain resistance was the only meaningful test, since the manufactured article itself was resistant to acids.

As can be easily established from the results reported in the above tables, therefore, a manufactured article according to the present invention has at least one coating layer + cover layer, which improve the resistance to corrosion and the resistance to stain by acid substances.

The results have shown, in fact that the deposition of a silicon-based polymer in combination with a treatment with cover layer (preferably resin) considerably improves the characteristics (lucidity, roughness, stain resistance) and hence the resistance of the manufactured article to the action of acid substances and to stains.

Tests Were also conducted with the deposition of a coating layer and cover layer according to the present invention on agglomerated stone material; in particular, such tests were conducted on 2 types of agglomerate (a micrograin and a macrograin) by examining 2 floor tiles for each type of material: one was subjected to stress in a vacuum oven at 75°C for 1 hour and then coated with nanoquartz while it was still hot (S60 HOT process), whereas the other was coated when it was at room temperature (S60 process).

The results are expressed in the following tables 30 - 45.

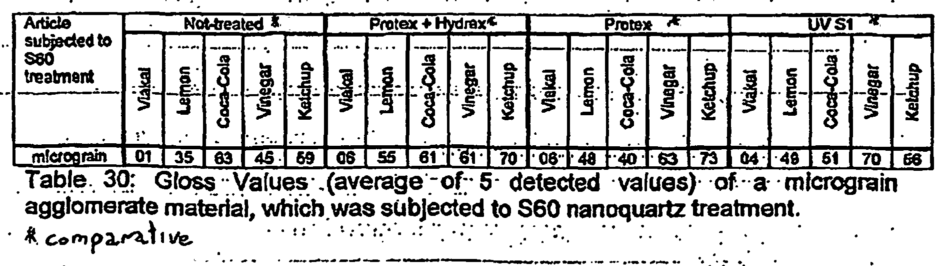

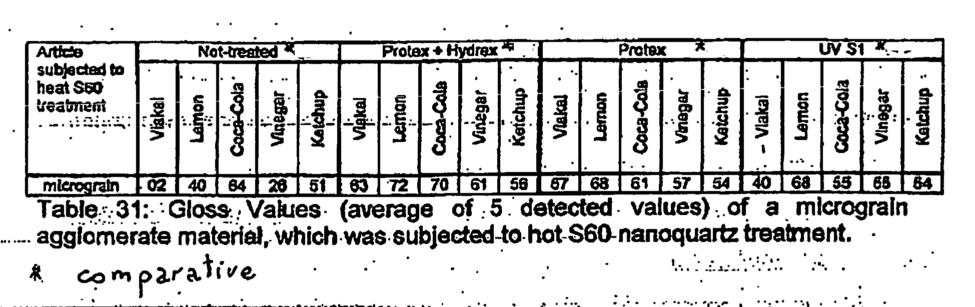

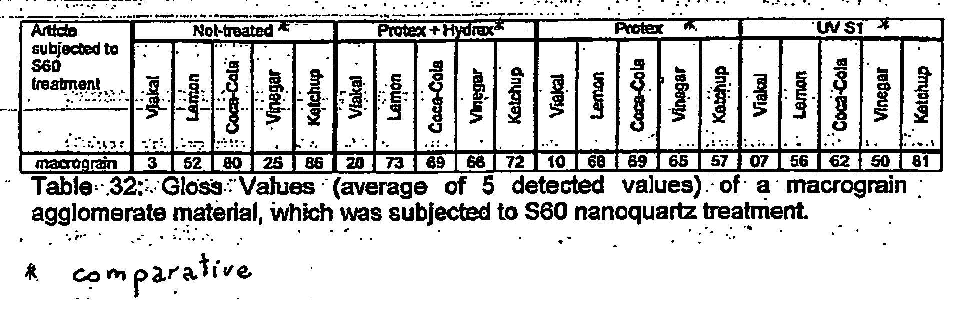

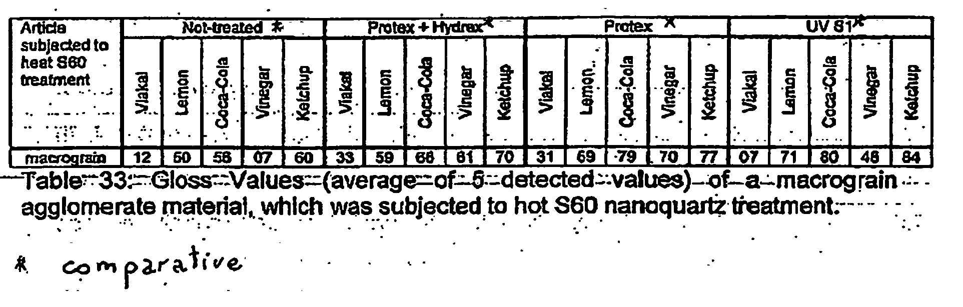

### Caption:

Stain: += slight stain; ++:= high visible stain; +++:= stain having the substrate colour; ++++:= stain having a colour different with respect to the substrate colour; +++++:= stain having a colour extremely different with respect to the substrate colour;
Glos Change: += gloss removal at individual points; ++= diffused gloss removal throughout the whole contact zone; +++= uniform gloss removal throughout the whole contact zone; ++++= substrate corrosion at individual points; +++++= substrate corrosion throughout the whole contact zone

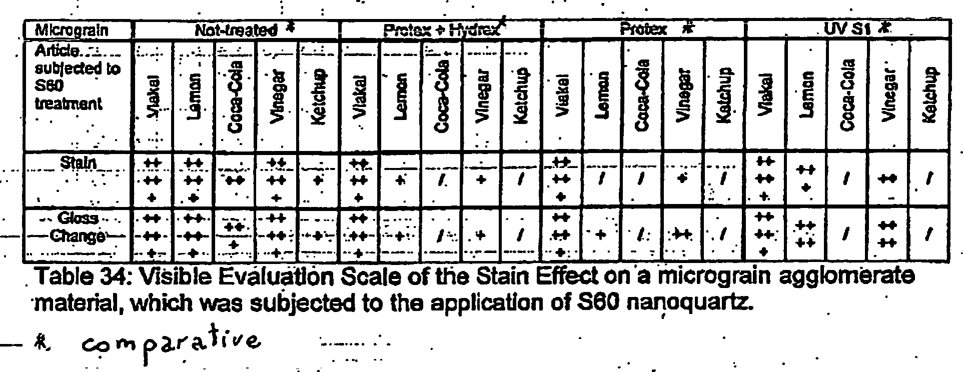

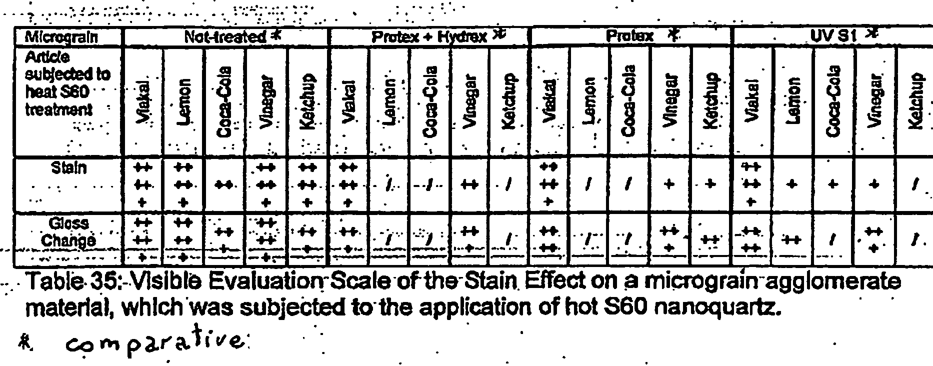

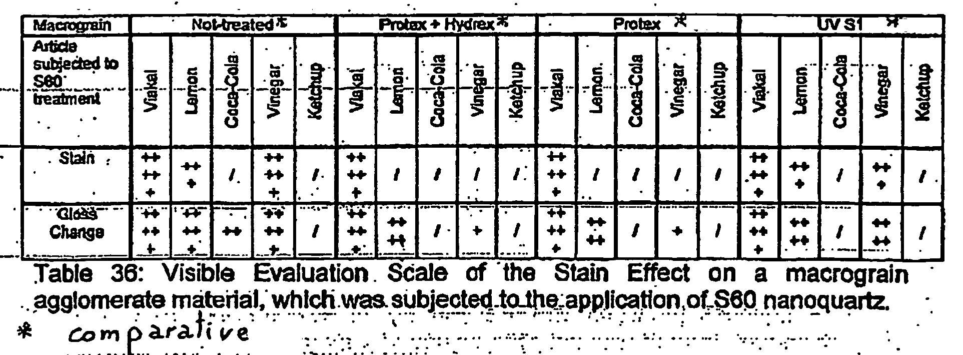

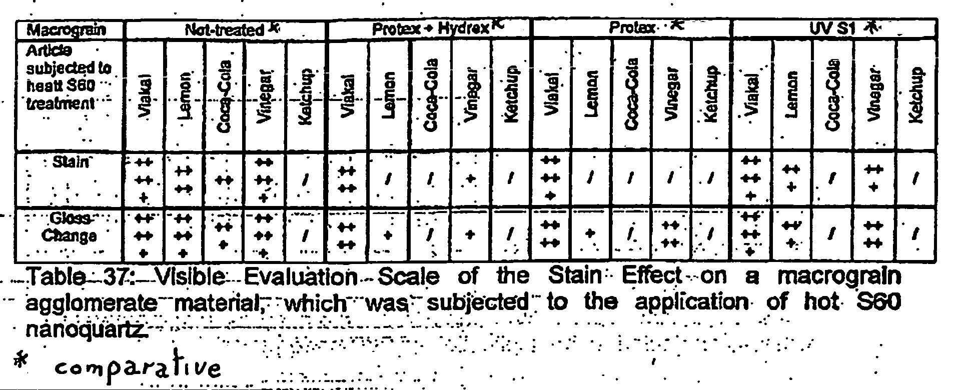

**Table 38: Roughness measurements Ra and Ry of agglomerate microgram material, which was treated with S60 nanoquartz, measured before reagent attack (5 detected values).**

| Article subjected to S60 treatment | Roughness * measurement (µm) | | Roughness * measurement (µm) | | Roughness * measurement (µm) | | Roughness * measurement (µm) | | Roughness * measurement (µm) | |
|---|---|---|---|---|---|---|---|---|---|---|
| | Ra | Ry | Ra | Ry | Ra | Ry | Ra | Ry | Ra | Ry |
| Micrograin | 0.10 | 215 | 0.08 | 1.66 | 0.09 | 1.41 | 0.08 | 0.87 | 0.09 | 1.77 |

| | | | | | | | | | | |
|---|---|---|---|---|---|---|---|---|---|---|
| * comparative | | | | | | | | | | |

**Table 39: Roughness measurements Ra and Ry of agglomerate micrograin material, which was treated with S60 nanoquartz and with Protex+Hydrex, measured after reagent attack (1 detected value for each stain).**

| Article subjected to S60 treatment and treated with Protex- Hydrex | Roughness * measurement (µm) | | Roughness * measurement (µm) | | Roughness * measurement (µm) | | Roughness * measurement (µm) | | Roughness * measurement (µm) | |
|---|---|---|---|---|---|---|---|---|---|---|
| | Viakal | | Lemon | | Coca-Cola | | Vinegar | | Ketchup | |
| | Ra | Ry | Ra | Ry | Ra | Ry | Ra | Ry | Ra | Ry |
| Micrograin | 2.11 | 19.04 | 0.32 | 3.96 | 0.08 | 1.59 | 0.19 | 3.05 | 0.10 | 1.58 |

| | | | | | | | | | | |
|---|---|---|---|---|---|---|---|---|---|---|
| * comparative | | | | | | | | | | |

**Table 40: Roughness measurements Ra and Ry of agglomerate micrograin material, which was treated with hot S60 nanoquartz, measured before reagent attack (5 detected values).**

| Article subjected to heat S60 treatment | Roughness * measurement (µm) | | Roughness * measurement (µm) | | Roughness * measurement (µm) | | Roughness * measurement (µm) | | Roughness * measurement (µm) | |
|---|---|---|---|---|---|---|---|---|---|---|
| | Ra | Ry | Ra | Ry | Ra | Ry | Ra | Ry | Ra | Ry |
| Micrograin | 0.10 | 1.52 | 0.08 | 0.99 | 0.11 | 0.92 | 0.06 | 0.70 | 0.07 | 0.91 |

| | | | | | | | | | | |
|---|---|---|---|---|---|---|---|---|---|---|
| * comparative | | | | | | | | | | |

**Table 41: Roughness measurements Ra and Ry of agglomerate micrograin material, which was treated with hot S60 nanoquartz and with Protex+Hydrex, measured after reagent attack (1 detected value for each stain).**

| Article subjected to heat S60 treatment and treated with Protex- Hydrex | Roughness * measurement (µm) | | Roughness * measurement (µm) | | Roughness * measurement (µm) | | Roughness * measurement (µm) | | Roughnes * measurement (µm) | |
|---|---|---|---|---|---|---|---|---|---|---|
| | Viaload | | Lemon | | Coca-Cola | | Vinegar | | Ketchup | |
| | Ra | Ry | Ra | Ry | Ra | Ry | Ra | Ry | Ra | Ry |
| Micrograin | 0.12 | 1.03 | 0.12 | 1.74 | 0.06 | 0.76 | 0.45 | 4.95 | 0.09 | 1.36 |

| | | | | | | | | | | |
|---|---|---|---|---|---|---|---|---|---|---|
| * comparative | | | | | | | | | | |

**Table 42: Roughness measurements Ra and Ry of agglomerate macrograin material, which was treated with S60 nanoquartz, measured before reagent attack (5 detected values).**

| Article subjected to S60 treatment | Roughness * measurement (µm) | | Roughness * measurement (µm) | | Roughness * measurement (µm) | | Roughness * measurement (µm) | | Roughness * measurement (µm) | |
|---|---|---|---|---|---|---|---|---|---|---|
| | Ra | Ry | Ra | Ry | Ra | Ry | Ra | Ry | Ra | Ry |
| Macrograin | 0.06 | 0.99 | 0.04 | 0.63 | 0.11 | 1.74 | 0.05 | 0.84 | 0.08 | 1.13 |

| | | | | | | | | | | |
|---|---|---|---|---|---|---|---|---|---|---|
| * comparative | | | | | | | | | | |

**Table 43: Roughness measurements Ra and Ry of agglomerate macrograin material, which was treated with S60 nanoquartz and with Protex+Hydrex, measured after reagent attack (1 detected value for each stain).**

| Article subjected to S60 treatement and treated with Protex- Hydrex | Roughness * measurement (µm) | | Roughness * measurement (µm) | | Roughness * measurement (µm) | | Roughness * measurement (µm) | | Roughness * measurement (µm) | |
|---|---|---|---|---|---|---|---|---|---|---|
| | Viakal | | Lemon | | Vinegar | | Coca-Cola | | Ketchup | |
| | Ra | Ry | Ra | Ry | Ra | Ry | Ra | Ry | Ra | Ry |
| Macrograin | 7.65 | 40.20 | 0.38 | 3.94 | 0.07 | 1.52 | 0.18 | 3.04 | 0.08 | 0.63 |

| | | | | | | | | | | |
|---|---|---|---|---|---|---|---|---|---|---|
| * comparative | | | | | | | | | | |

**Table 44: Roughness measurements Ra and Ry of agglomerate macrograin material, which was treated with hot S60 nanoquartz, measured before reagent attack (5 detected values).**

| subjected to heat S60 treatment | Roughness * measurement (µm) | | Roughness * measurement (µm) | | Roughness * measurement (µm) | | Roughness * measurement (µm) | | Roughness * measurement (µm) | |
|---|---|---|---|---|---|---|---|---|---|---|
| | Ra | Ry | Ra | Ry | Ra | Ry | Ra | Ry | Ra | Ry |
| Macrograin | 0.08 | 1.38 | 0.08 | 0.63 | 0.07 | 0.84 | 0.07 | 0.68 | 0.08 | 0.73 |

| | | | | | | | | | | |
|---|---|---|---|---|---|---|---|---|---|---|
| * comparative | | | | | | | | | | |

**Table 45 Roughness measurements Ra and Ry of agglomerate macrograin material, which was treated with hot S60 nanoquartz and with Protex+Hydrex, measured after reagent attack (1 detected value for each stain).**

| Article subjected to heat S60 and treated with Protex- Hydrex | Roughness * measurement (µm) | | Roughness * measurement (µm) | | Roughness * measurement (µm) | | Roughness * measurement (µm) | | Roughness * measurement (µm) | |
|---|---|---|---|---|---|---|---|---|---|---|
| | treatment Viakal | | Lemon | | Coca-Cola | | Vinegar | | Ketchup | |
| | Ra | Ry | Ra | Ry | Ra | Ry | Ra | Ry | Ra | Ry |
| Macrograin | 4.33 | 31.02 | 0.16 | 1.55 | 0.12 | 1.33 | 0.89 | 8.59 | 0.04 | 0.38 |

| | | | | | | | | | | |
|---|---|---|---|---|---|---|---|---|---|---|
| * comparative | | | | | | | | | | |

Such results show that the application of a cover layer onto a manufactured article coated with a PECVD technique does not always cause an improvement of the resistance to acid substances. One can see, for example, the gloss values of the micrograin or macrograin coated with a S60 process after the application of Coca Cola ®, or the gloss values of the macrograin coated with a S60 process after the application of the ketchup, or still other examples.

The applicant deems that such phenomenon could be due to the presence of resin in the agglomerate, which, as sustained above, could be subjected during the treatment to heating at temperatures with are equal to or greater than its softening range, and thus it could be subjected to expansion.

The manufactured article and the above-described process are susceptible to numerous modifications and variations within the protective scope defined by the contents of the claims.

## Claims

1. A manufactured article made of natural stone material including at least one coating layer comprising at least one polymer with molecular formula:
SiOₓC_{y}H_{z}N_{w}
wherein x can be a whole number or a fractional number between 0.5 and 20,
whereas y, z and w can be whole numbers or fractional numbers between 0 and 20,
applied by means of plasma phase polymerization of at least one silicon-and oxygen-based organic or inorganic monomer which is in the gaseous state in reaction conditions,
**characterized in that** it comprises at least one cover layer of said at least one coating layer obtained by applying, above said coating layer, at least one resin-based compound selected from the group comprising:
- fluorine-, phosphorus-, silicon-, boron- or sulphur-based polymers;
- organometallic polymers;
- thermosetting polymers;
- polyurethanes, epoxy acrylates, phenols, polyurethane acrylate, vinyls, vinyl ester;
- polymers of natural origin, such as cellulose or linseed oil; and
- monomers belonging to the acrylic, epoxy, polyurethane group and their derivatives

2. A manufactured article according to claim 1, **characterized in that** said organic or inorganic monomer is an organosilicon compound which can be evaporated under pressure ranging from 0.01 - 100 Pa.

3. A manufactured article according to claim 1 or 2, **characterized in that** said organic or inorganic monomer is selected from the group composed of hexamethyldisiloxane (HMDSO), tetramethylsilane (TMS), tetraethoxysilane (TEOS).

4. A manufactured article according to any preceding claim, **characterized in that** said manufactured article is pre-treated by means of plasma phase polymerization of at least one compound selected from the group including oxygen, air, nitrogen, carbon dioxide, nitrogen oxides.

5. A manufactured article according to any preceding claim, **characterized in that** said manufactured article, before the application of said coating layer, is covered with at least one primer.

6. A manufactured article according to any claim 1 to 5, **characterized in that** x is a whole number or a fractional number between 1 and 3.

7. A process for obtaining a manufactured article having at least one total or partial coating layer, **characterized in that** it comprises:
- at least one step of plasma phase polymerization of at least one silicon-and oxygen-based organic or inorganic monomer on at least part of said manufactured article made of natural stone material thereby applying to said manufactured article at least one polymer with the following molecular formula:
SiOₓC_{y}H_{z}N_{w}
wherein x can be a whole number or fractional number between 0.5 and 20,
whereas y, z and w can be whole numbers or fractional numbers between 0 and 20; and
- at least one step of applying at least one resin-based compound selected from the group comprising:
- fluorine-, phosphorous-, silicon-, boron- or sulphur-based polymers;
- organometallic polymers;
- thermosetting polymers;
- polyurethanes, epoxy acrylates, phenols, polyurethane acrylate, vinyls, vinyl ester;
- polymers of natural origin, such as cellulose or linseed oil; and
- monomers belonging to the acrylic, epoxy, polyurethane group and derivatives thereof.

8. A process according to claim 7, **characterized in that** said monomer is selected from the group comprising hexamethyldisiloxane (HMDSO), tetramethylsilane (TMS), tetraethoxysilane (TEOS).

9. A process according to claim 7, **characterized in that** said polymers based on fluorine, phosphorus, silicon, boron or sulphur are selected from the group including perfluoropolyether fluoroelastomers, perfluoropolyurethanes, perfluoropolyoxyalkanes, fluorinated acrylic polymers, fluoroalkyl salts and their derivatives, polyphosphazenes, polycarbophosphazenes, polythiophosphazenes, polythionylphosphazenes and polyphosphates, polysiloxanes, polysilanes, polysilazanes and polycarbosilanes, polyborazines and polythiazenes.

10. A process according to claim 7, **characterized in that** said organometallic polymers comprise polymer materials whose structure includes transition metal complexes.

11. A process according to claim 9 or 10, **characterized in that** said plasma phase polymerization is conducted at a pressure in the range of 100 Pa - 0.01 Pa.

12. A process according to any claim 7 to 11, **characterized in that** said process comprises a pre-treatment of said manufactured article, by means of plasma phase polymerization of at least one compound selected from the group including oxygen, air, nitrogen, carbon dioxide, nitrogen oxides.

13. A process according to any claim 7 to 12, **characterized in that** x is a whole number or fractional number between 1 and 3.

14. A process according to any claim 7 to 13, **characterized in that** said manufactured article, before the application of said coating layer, is covered with at least one primer.

## Patentansprüche

1. Ein gefertigter Gegenstand, hergestellt aus Natursteinmaterial, enthaltend mindestens eine Beschichtungsschicht, welche mindestens ein Polymer der Molekülformel:
SiOₓC_{y}H_{z}N_{w}
umfasst, wobei x eine ganze Zahl oder eine Bruchzahl zwischen 0,5 und 20 sein kann, während y, z und w ganze Zahlen oder Bruchzahlen zwischen 0 und 20 sein können, welche mittels Plasmaphasenpolymerisation mindestens eines organischen oder anorganischen Monomers auf Silizium- und Sauerstoff-Basis, welches unter Reaktionsbedingungen im gasförmigen Zustand vorliegt, aufgebracht ist,
**dadurch gekennzeichnet, dass** er mindestens eine Dickschicht auf der mindestens einen Beschichtungsschicht umfasst, die erhalten wird durch Aufbringen, auf die Beschichtungsschicht, mindestens einer Verbindung auf Harz-Basis, ausgewählt aus der Gruppe, umfassend:
- Polymere auf Fluor-, Phosphor-, Silizium-, Bor- oder Schwefel-Basis;
- Metallorganische Polymere;
- Duroplaste;
- Polyurethane, Epoxyacrylate, Phenole, Polyurethanacrylat, Vinyle, Vinylester;
- Polymere natürlichen Ursprungs, wie Cellulose oder Leinöl; und
- Monomere, die zur Gruppe der Acryle, Epoxide, Polyurethane gehören sowie Derivate davon.

2. Ein gefertigter Gegenstand nach Anspruch 1, **dadurch gekennzeichnet, dass** das organische oder anorganische Monomer eine Organosiliziumverbindung ist, welche unter einem Druck im Bereich von 0,01 - 100 Pa verdampft werden kann.

3. Ein gefertigter Gegenstand nach Anspruch 1 oder 2, **dadurch gekennzeichnet, dass** das organische oder anorganische Monomer aus der Gruppe, bestehend aus Hexamethyldisiloxan (HMDSO), Tetramethylsilan (TMS), Tetraethoxysilan (TEOS), ausgewählt ist.

4. Ein gefertigter Gegenstand nach einem vorstehenden Anspruch, **dadurch gekennzeichnet, dass** der gefertigte Gegenstand mittels Plasmaphasenpolymerisation von mindestens einer Verbindung, ausgewählt aus der Gruppe, enthaltend Sauerstoff, Luft, Stickstoff, Kohlenstoffdioxid, Stickstoffoxide, vorbehandelt ist.

5. Ein gefertigter Gegenstand nach einem vorstehenden Anspruch, **dadurch gekennzeichnet, dass** der gefertigte Gegenstand vor dem Aufbringen der Beschichtungsschicht mit mindestens einem Grundiermittel bedeckt ist.

6. Ein gefertigter Gegenstand nach einem der Ansprüche 1 bis 5, **dadurch gekennzeichnet, dass** x eine ganze Zahl oder eine Bruchzahl zwischen 1 und 3 ist.

7. Ein Verfahren zum Erhalt eines gefertigten Gegenstandes mit mindestens einer vollständigen oder teilweisen Beschichtungsschicht, **dadurch gekennzeichnet, dass** es umfasst:
- mindestens einen Schritt der Plasmaphasenpolymerisation mindestens eines organischen oder anorganischen Monomers auf Silizium- und Sauerstoff-Basis auf mindestens einem Teil des aus Natursteinmaterial hergestellten gefertigten Gegenstandes, wobei mindestens ein Polymer der folgenden Molekülformel auf den gefertigten Gegenstand aufgebracht wird:
SiOₓC_{y}H_{z}N_{w}
wobei x eine ganze Zahl oder eine Bruchzahl zwischen 0,5 und 20 sein kann,
während y, z und w ganze Zahlen oder Bruchzahlen zwischen 0 und 20 sein können; und
- mindestens ein Schritt des Aufbringens mindestens einer Verbindung auf Harz-Basis, ausgewählt aus der Gruppe, umfassend:
- Polymere auf Fluor-, Phosphor-, Silizium-, Bor- oder Schwefel-Basis:
- Metallorganische Polymere;
- Duroplast
- Polyurethane, Epoxyacrylate, Phenole, Polyurethanacrylat, Vinyle, Vinylester;
- Polymere natürlichen Ursprungs, wie Cellulose oder Leinöl; und
- Monomere, die zur Gruppe der Acryle, Epoxide, Polyurethan gehören sowie Derivate davon.

8. Ein Verfahren nach Anspruch 7, **dadurch gekennzeichnet, dass** das Monomer aus der Gruppe, umfassend Hexamethyldisiloxan (HMDSO), Tetramethylsilan (TMS), Tetraethoxysilan (TEOS), ausgewählt ist.

9. Ein Verfahren nach Anspruch 7, **dadurch gekennzeichnet, dass** die Polymere auf Basis von Fluor, Phosphor, Silizium, Bor oder Schwefel aus der Gruppe, enthaltend Perfluorpolyetherfluorelastomere, Perfluorpolyurethane, Perfluorpolyoxyalkane, fluorierte Acrylpolymer, Fluoralkylsalze und deren Derivate, Polyphosphazene, Polycarbophosphazene, Polythiophosphazene, Polythionylphosphazene und Polyphosphate, Polysiloxane, Polysilane, Polysilazane und Polycarbosilane, Polyborazine und Polythiazine, ausgewählt sind.

10. Ein Verfahren nach Anspruch 7, **dadurch gekennzeichnet, dass** die metallorganischen Polymere Polymermaterialien umfassen, deren Strukturen Übergangsmetallkomplexe beinhalten,

11. Ein Verfahren nach Anspruch 9 oder 10, **dadurch gekennzeichnet, dass** die Plasmaphasenpoiymerisation bei einem Druck im Bereich von 100 Pa - 0,01 Pa durchgeführt wird.

12. Ein Verfahren nach einem der Ansprüche 7 bis 11, **dadurch gekennzeichnet, dass** das Verfahren eine Vorbehandlung des gefertigten Gegenstandes mittels Plasmaphasenpolymerisation von mindestens einer Verbindung, ausgewählt aus der Gruppe, enthaltend Sauerstoff, Luft, Stickstoff, Kohlenstoffdioxid, Stickstoffoxide, umfasst.

13. Ein Verfahren nach einem der Ansprüche 7 bis 12, **dadurch gekennzeichnet, dass** x eine ganze Zahl oder eine Bruchzahl zwischen 1 und 3 ist.

14. Ein Verfahren nach einem der Ansprüche 7 bis 13, **dadurch gekennzeichnet, dass** der gefertigte Gegenstand vor dem Aufbringen der Beschichtungsschicht mit mindestens einem Grundiermittel bedeckt ist.

## Revendications

1. Un produit manufacturé formé à partir d'un matériau consistant en pierre naturelle comprenant au moins une couche de revêtement comprenant au moins un polymère de formule moléculaire:
**SiOₓC_{y}H_{z}N_{w}**
dans laquelle formule:
x peut être un nombre entier ou un nombre fractionnaire compris entre 0,5 et 20, y, z et w peuvent être des nombres entiers ou fractionnaires compris entre 0 et 20, cette couche étant appliquée par polymérisation en phase plasma d'au moins un monomère organique ou inorganique à base de silicium et d'oxygène et qui est à l'état gazeux dans les conditions réactionnelles,
ce produit manufacturé étant **caractérisé en ce qu'**il comprend au moins une couche de couverture de ladite au moins couche de revêtement, obtenue en appliquant au-dessus de ladite couche de revêtement au moins un composé à base de résine choisi dans le groupe comprenant:
- les polymères à base de fluor, phosphore, silicium,-bore ou soufre;
- les polymères organométalliques;
- les polymères thermodurcissables;
- les polyuréthannes, les époxy-acrylates, les phénols, les acrylates de polyuréthane, les vinyles, les esters de vinyle;
- les polymères d'origine naturelle, tels que la cellulose ou l'huile de lin, et
- les monomères appartenant aux groupes des acryliques, époxy, polyuréthanne et leurs dérivés.

2. Un produit manufacturé selon la revendication 1, **caractérisé en ce que** ledit monomère organique ou inorganique est un composé organo-silicium qui peut être évaporé sous une pression comprise entre 0,01 et 100 Pa.

3. Un produit manufacturé selon la revendication 1 ou 2, **caractérisé en ce que** ledit monomère organique ou inorganique est choisi dans le groupe composé par hexaméthyldisiloxane (HMDSO), tétraméthylsilane (TMS), tétraéthoxysilane (TEOS).

4. Un produit manufacturé selon l'une quelconque des revendications précédentes, **caractérisé en ce que** ledit produit manufacturé est prétraité par des moyens de polymérisation en phase plasma d'au moins un composé choisi dans le groupe comprenant l'oxygène, l'air, l'azote, le dioxyde de carbone, les oxydes d'azote.

5. Un article manufacturé selon l'une quelconque des revendications précédentes, **caractérisé en ce que** ledit produit manufacturé, avant l'application de ladite couche de revêtement, est recouvert d'au moins une amorce.

6. Un produit manufacturé selon l'une quelconque des revendications 1 à 5, **caractérisé en ce que** x est un nombre entier ou un nombre fractionnaire compris entre 1 et 3.

7. Procédé pour l'obtention d'un article manufacturé comportant au moins une couche de revêtement totale ou partielle, **caractérisé en ce qu'**il comprend:
- au moins une étape de polymérisation en phase plasma d'au moins un monomère organique ou inorganique à base de silicium et d'oxygène sur au moins une partie dudit produit manufacturé formé à partir d'un matériau consistant en pierre naturelle, appliquant ainsi sur ledit article manufacturé au moins un polymère avec la formule moléculaire suivante:
**SiOₓC_{y}H_{z}N_{w}**
dans laquelle
x peut être un nombre entier ou nombre fractionnaire compris entre 0,5 et 20,
y, z et w peuvent être des nombres entiers ou fractionnaires compris entre 0 et 20, au moins une étape d'application d'au moins un composé à base de résine choisi dans le groupe comprenant:
les polymères à base de fluor, phosphore, silicium,-bore ou soufre;
- les polymères organométalliques;
- les polymères thermodurcissables;
- les polyuréthannes, les époxy-acrylates, les phénols, les acrylates de polyuréthane, les vinyles, les esters de vinyle;
- les polymères d'origine naturelle, tels que la cellulose ou l'huile de lin, et
- les monomères appartenant aux groupes des acryliques, époxy, polyuréthanne et leurs dérivés.

8. Un procédé selon la revendication 7, **caractérisé en ce que** ledit monomère est choisi dans le groupe comprenant hexaméthyldisiloxane (HMDSO), tétraméthylsilane (TMS), tétraéthoxysilane (TEOS).

9. Un procédé selon la revendication 7, **caractérisé en ce que** lesdits polymères à base de fluor, de phosphore, de silicium, de bore ou de soufre sont choisis dans le groupe comprenant les perfluoropolyéther les fluoroélastomères, les perfluoropolyuréthanes, les perfluoropolyoxyalkanes, les polymères acryliques fluorés, les sels fluoroalkylés et leurs dérivés, les polyphosphazènes, les polycarbophosphazènes, les polythiophosphazènes, les polythionylphosphazènes et les polyphosphates, les polysiloxanes, les polysilazanes, les polysilanes et les polycarbosilanes, polyborazines et polythiazènes.

10. Un procédé selon la revendication 7, **caractérisé en ce que** lesdits polymères organométalliques comprennent des matériaux polymères dont la structure comprend des complexes de métaux de transition.

11. Le procédé selon la revendication 9 ou 10, **caractérisé en ce que** ladite polymérisation en phase plasma est conduite à une pression dans la plage de 100 Pa à 0,01 Pa.

12. Le procédé selon l'une quelconque des revendications 7 à 11, **caractérisé en ce que** ce procédé comprend un prétraitement du produit manufacturé au moyen d'une polymérisation en phase plasma d'au moins un composé choisi dans le groupe comprenant oxygène, l'air, l'azote, le dioxyde de carbone, les oxydes d'azote.

13. Le procédé selon l'une quelconque des revendications 7 à 12, **caractérisé en ce que** x est un nombre entier ou nombre fractionnaire compris entre 1 et 3.

14. Le procédé selon l'une quelconque des revendications 7 à 13, **caractérisé en ce que** ledit produit manufacturé, avant application de ladite couche de revêtement, est recouvert d'au moins une amorce.
